Europäisches Patentamt

(19) European Patent Office

Office européen des brevets

(11) Veröffentlichungsnummer: **0 098 989**
**B1**

(12) **EUROPÄISCHE PATENTSCHRIFT**

(45) Veröffentlichungstag der Patentschrift:
**29.01.86**

(21) Anmeldenummer: **83105894.6**

(22) Anmeldetag: **16.06.83**

(51) Int. Cl.⁴: **G 02 B 23/16**, G 02 B 23/12

(54) **Vorrichtung zum Ein- und Abschalten eines Signals bei optischen oder optronischen Geräten.**

(30) Priorität: **05.07.82 DE 3225022**

(43) Veröffentlichungstag der Anmeldung:
**25.01.84 Patentblatt 84/4**

(45) Bekanntmachung des Hinweises auf die Patenterteilung:
**29.01.86 Patentblatt 86/5**

(84) Benannte Vertragsstaaten:
**BE FR GB IT NL SE**

(56) Entgegenhaltungen:
**EP - A - 0 043 133**
**CH - A - 488 165**
**DE - B - 2 040 445**
**FR - A - 2 006 075**
**US - A - 3 669 523**

(73) Patentinhaber: **ELTRO GmbH Gesellschaft für Strahlungstechnik, Kurpfalzring 106 Postfach 10 21 20, D-6900 Heidelberg 1 (DE)**

(72) Erfinder: **Karning, Heinrich, Albert-Fritz-Strasse 6, D-6900 Heidelberg (DE)**
Erfinder: **Raubinger, Gerhard, Kolbenzeil 27, D-6900 Heidelberg (DE)**
Erfinder: **Weigel, Wolfgang, Dachsweg 2, D-6901 Dossenheim (DE)**

(74) Vertreter: **Muschka, Wilhelm, Dipl.-Ing., Eltro GmbH Gesellschaft für Strahlungstechnik Kurpfalzring 106 Postfach 10 21 20, D-6900 Heidelberg 1 (DE)**

## Beschreibung

Die Erfindung bezieht sich auf eine Vorrichtung zum Ein- und Abschalten eines Signals bei optischen und optronischen Geräten nach dem Oberbegriff des Anspruchs 1.

Ein solches Gerät ist aus EP-A Nr. 0043133 bekannt. Hier wird ein Mikroskop behandelt, bei dem mit Hilfe einer am Gesicht des Benutzers reflektierten en Strahlung — also nicht durch Druck des Kopfes des Benutzers — eine Beleuchtung ein- und ausgeschaltet wird. Die Lichtleitung verläuft in einem parallelen Gang seitlich des Okulars.

Aus der DE-U Nr. 6610529 ist es bekannt, die Stromversorgung eines an einem Stirnband befestigten IR-Sichtgerätes von Hand ein- und durch blosses Abnehmen von Kopf wieder auszuschalten. Von Nachteil ist hierbei, dass der Schalter an einer anthropotechnisch ungünstigen Stelle sitzt und ausserdem für den Einschaltvorgang eine Handbewegung erforderlich ist, so dass die in Anspruch genommene Hand für einen Augenblick für andere Betätigungsfunktionen nicht verfügbar ist. Dies kann z.B. bei wehrtechnischem Gerät von Nachteil sein, wo oft gleichzeitig mehrere Massnahmen, wie Beobachten und/oder Zielen sowie Schiessvorbereitungen, erforderlich sind. Dieselben Nachteile ergeben sich auch für das aus der DE-U Nr. 1901557 bekannte IR-Sichtgerät. Ein Schalter ist hier so ausgebildet, dass er durch Federwirkung in ausgeschalteter Stellung gehalten wird, wenn das IR-Gerät nicht benutzt wird.

Es gibt sodann eine weitere Kategorie von optischen oder optronischen Geräten, bei denen zwei Betriebsarten möglich sind: In der Betriebsart BEREIT werden zunächst nur diejenigen Gerätefunktionen mit Strom versorgt, die eine längere Anlaufzeit haben und deshalb zur schnellstmöglichen Einsatzbereitschaft in Betrieb gehalten werden müssen. Hierzu gehören z.B. Kühlaggregate und Röhrenheizungen. Bei der weiteren Betriebsart EIN dieser Geräte wird das Gesamtgerät mit Strom versorgt. Erst jetzt ist es auch betriebsbereit. Beide Betriebsarten sind in der Regel mit einem kombinierten, im Wechsel von BEREIT auf EIN zu verstellenden Schalter zu betätigen. Abgesehen von den bereits erwähnten Nachteilen der Bindung wenigstens einer Hand an die Bedienfunktion besteht hier noch die zusätzliche Gefahr, dass das Zurückschalten in die Stellung BEREIT vergessen und damit die Batteriekapazität strapaziert wird.

Die Aufgabe der Erfindung wird in der Schaffung einer Möglichkeit gesehen, bei gattungsgleichen Geräten eine gleichlaufend mit ihrer Benutzung oder Nichtbenutzung einhergehende Ein- oder Ausschaltung des betriebsbereiten Zustandes vorzusehen. Diese Aufgabe wird erfindungsgemäss durch die im Kennzeichen des Anspruchs 1 genannten Merkmale gelöst. Auf diese Weise bleibt gewährleistet, dass der Benutzer keinerlei zusätzliche Bedienfunktionen auszuüben braucht, sondern sich voll auf die Benutzerfunktion des Gerätes und gegebenenfalls auf andere wichtige Massnahmen konzentrieren kann.

Eine Weiterbildung der Erfindung sieht vor, dass ein Schalter vorgesehen ist, der durch das Empfängersignal geschaltet wird, der bei durch die Blende nicht unterbrochener Strahlung das Gerät in Bereitschaftsstellung hält und bei unterbrochener Strahlung das Gerät in Betriebsstellung hält. Durch eine konstruktive Ausgestaltung dieser Art wird ein benutzungsfreundlicher Gebrauch eines solchen Gerätes überhaupt erst möglich, weil er einmal bar jeder überflüssiger Bedienfunktionen ist und zum anderen in der Stellung BEREIT die Batteriekapazität schont.

Je nach Beschaffenheit des zu bedienenden Gerätes können für einen Ein/Ausschalter Fototransistoren, Fotoelemente oder Fotowiderstände als Empfänger und Glühlampen, Fluoreszenzschirme oder — z.B. von einem Wärmebildgerät stammende — lichtemittierende Dioden mit einer Dauerstrich- oder pulsierenden oder kodiert pulsierenden Strahlung als Sender verwendet werden. Die lichtemittierenden Dioden können für die in Rede stehende Verwendung aber auch von der in das Okular eingeblendeten Anzeige eines vorgeschalteten Laserentfernungsmessgerätes oder dgl. entliehen sein. Verwendung von modulierten LEDs bietet hierbei den Vorteil, dass sich damit eine völlige Unempfindlichkeit gegenüber störendem äusseren Lichteinfall erzielen lässt.

Von Vorteil kann ferner sein, dass die den Strahlengang je nach Bedarf schliessende oder freigebende Blende aus einem oder aus mehreren an der Augenauflage angeformten und durch — über den Kopfandruck bewirkte — Materialverformung der Augenauflage nach den Aussenseiten wegschwenkbaren Schutzlappen besteht, und dass in letzterem Fall die Schutzlappen an einander gegenüberliegenden Stellen der Augenauflage angeformt sind und bei geschlossener Blende bis zu ihrer gegenseitigen Berührung im Bereich der Längsachse des Okulars reichen.

Was die Anordnung von Sender und Empfänger anbetrifft, so sind verschiedene sinnvolle Möglichkeiten denkbar, so z.B., dass die gesendete und die empfangene Strahlung direkt oder über optische Mittel in die Lupenoptik des Okulars ein- und auch wieder austritt, wobei dann die optischen Mittel aus einer Zusatzoptik, einer Strahlteilerplatte, einer Prismenkombination, einem Strahlteilerwürfel oder einer Kombination von Strahlteilerwürfel und Zielmarkenprojektor bestehen, und dass Sender und Empfänger im Randbereich der Lupenoptik sowie im Fall der Verwendung einer Zusatzoptik oder einer Prismenkombination parallel nebeneinanderliegend, im Fall der Verwendung einer Strahlteilerplatte oder eines Strahlteilerwürfels um 90° zueinander versetzt und im Fall der Kombination von Strahlteilerwürfel und Zielmarkenprojektor in der Zielmarkenebene angeordnet sind. Die Verwendung des Strahlteilerwürfels, der Strahlteilerplatte, der Prismenkombination oder des Zielmarkenprojektors bietet dabei gegenüber der Zusatzoptik den Vorteil, dass das exakt auf demselben Weg ausgesandte und wieder reflektierte Signal auch sicher empfangen werden kann.

Ein weiteres vorteilhaftes Merkmal der Erfindung sieht vor, dass an den nicht von Strahlenreflexion, Strahlenein- oder Strahlenaustritt betroffenen Seiten des Strahlteilerwürfels und der Prismenkombination ein Absorber angebracht ist, der der Gefahr des Übersprechens begegnet.

Nachfolgend wird die Erfindung an Hand einiger Ausführungsbeispiele näher erläutert, wobei die in den einzelnen Figuren einander entsprechenden Teile dieselben Bezugzeichen aufweisen. Es zeigt

Fig. 1 die erfindungsgemässe Vorrichtung mit einer Sender und Empfänger zugeordneten Strahlteilerplatte,

Fig. 2 die Vorrichtung gemäss Fig. 1 mit einem Sender und Empfänger zugeordneten Strahlteilerwürfel oder

Fig. 2a die lediglich angedeutete Vorrichtung gemäss Fig. 1 mit einer Sender und Empfänger optisch vorgeschalteten Lupenoptik oder

Fig. 2b mit einer Sender und Empfänger zugeordneten Prismenkombination oder

Fig. 2c mit einer Sender und Empfänger zugeordneten Kombination aus Strahlteilerwürfel und Zielmarkenprojektor.

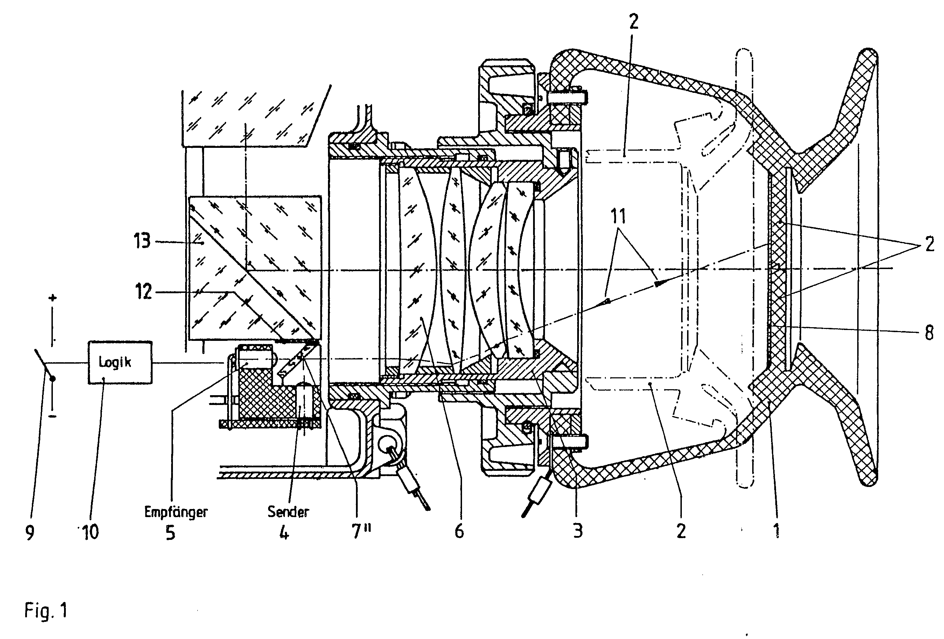

Wenn in Fig. 1 der Benutzer z.B. eines Zielgerätes zum Beobachten oder Zielen seinen Kopf gegen die aus Gummi oder Kunststoff gefertigte Augenauflage 1 drückt, so verformt sich dieselbe aus der mit vollen Linien gezeichneten in die mit strichpunktierten Linien angedeutete Stellung. Die innenseitig an der Augenauflage angeformte Blende 2 setzt sich im vorliegenden Ausführungsbeispiel aus zwei aus dem gleichen Material bestehenden und in nicht betätigtem Zustand bis in den Bereich der Längsachse des Gerätes reichenden Schutzlappen zusammen, die durch den Andruck des Kopfes nach den Aussenseiten des Gerätes hin — um etwa einen Winkel von 90° — verschwenkt werden und damit den Sichtkanal für das Auge des Benutzers freigeben. Bei anderen, zeichnerisch nicht dargestellten Ausführungsbeispielen kann die Blende nur aus einem oder aber aus mehr als zwei Schutzlappen bestehen, die auch um einen kleineren oder einen grösseren Winkel als 90° verschwenkt werden können. Mit dieser Bedienfunktion ist ein optronischer Schalter gekoppelt, der im wesentlichen aus einer Lichtschranke besteht und wie folgt angeordnet ist bzw. funktioniert:

Im Randbereich der im vorliegenden Ausführungsbeispiel aus vier Linsen bestehenden Optik 6 des Okulars 3 sind ein Sender 4 und ein Empfänger 5 um 90° zueinander versetzt angeordnet. Der Sender besteht hierbei aus z.B. einer lichtemittierenden Diode und der Empfänger aus einer Fotodiode. Bei anderen Ausführungsbeispielen kann der Sender ebensogut aus einer Glühlampe oder einem Fluoreszenzschirm und der Empfänger aus einem Fotoelement oder einem Fotowiderstand bestehen. Mit der Bezugszahl 13 ist sodann noch der die Zielmarke einspiegelnde Strahlteilerwürfel bezeichnet.

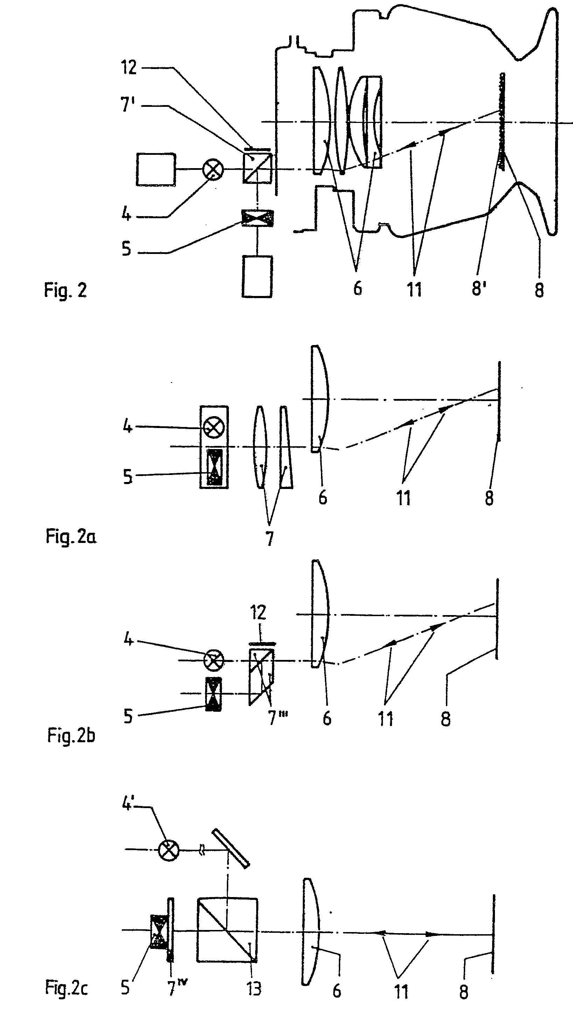

Die vom Sender abgegebene sichtbare oder IR-Strahlung gelangt über die die Strahlung um 90° umlenkende Strahlteilerplatte 7″ und die Optik 6 auf die Rückseite der verschlossenen Blende 2. Letztere ist an ihrer dem Benutzer abgekehrten Seite mit der Reflexfolie 8 versehen, deren Struktur 8′ vor allem aus Fig. 2 ersichtlich ist. Wie der Doppelpfeil 11 andeutet, wird die Strahlung von der Folie auf die Strahlteilerplatte 7″ reflektiert, tritt durch diese hindurch und gelangt auf den Empfänger 5. Die einfachste Ausführung einer solchen Platte ist eine (Kunst-)Glasplatte. Die Senderstrahlung kann entweder im Dauerstrich oder pulsierend — auch kodiert — abgegeben werden. Der Empfänger 5 formt die Strahlung auf optoelektronischem Weg in ein elektrisches Signal um. Solange dieses Signal ansteht, ist der optische Kreis geschlossen. Dies ist gleichbedeutend damit, dass die Augenauflage 1 von keinem Benutzer betätigt wurde bzw. dass sich das Gerät im Betriebszustand BEREIT befindet, bei dem nur die eine längere Anlaufzeit beanspruchenden Gerätefunktionen unter Strom stehen. Wird dagegen die Augenauflage betätigt, klappen die Schutzlappen der Blende 2 in der vorstehend dargelegten Weise zur Seite und der optische Weg zwischen Sender 4 und Empfänger 5 wird unterbrochen, bzw. das Empfängersignal wird stark reduziert.

Durch die Reduzierung des Empfängersignals wird über die dem Empfänger 5 nachgeschaltete Logik 10 der Schalter 9 betätigt, der das Gerät vom Betriebszustand BEREIT in den Zustand EIN schaltet, in dem das ganze Gerät mit Strom versorgt wird. Durch eine entsprechende Verzögerungsschaltung in der Logik kann das Gerät jetzt für eine bestimmte Zeit auf diesem Mode gehalten werden. Ebenso ist es möglich, die Einschaltfunktion von bestimmten Kriterien abhängig zu machen.

Beendet der Benutzer die Nutzungsphase (Ziel und/oder Beobachtungsvorgang), so wird die Augenauflage 1 entspannt, die Schutzlappen 2 gehen aus ihrer mit strichpunktierter Linienführung angedeuteten Lage in diejenige mit ausgezogener Linienführung dargestellte zurück, der optische Kreis wird automatisch wieder geschlossen und damit das Gerät von EIN nach BEREIT geschaltet.

Fig. 2 stellt insofern eine Modifikation des Ausführungsbeispiels gemäss Fig. 1 dar, als anstelle der Strahlteilerplatte 7″ der Strahlteilerwürfel 7′ verwendet wird, bei dem Sender 4 und Empfänger 5 ebenso wie bei der Strahlteilerplatte 7″ gemäss dem Ausführungsbeispiel von Fig. 1 um 90° zueinander versetzt angeordnet sind. Dabei wird die von der Struktur 8′ der Reflexfolie reflektierte Strahlung von der Strahlteilerplatte ebenfalls um 90° auf den in dieser Richtung angeordneten Empfänger umgelenkt. Auch eine vertauschte Anordnung von Sender und Empfänger ist hier möglich.

Im Ausführungsbeispiel der Fig. 2a sind Sender 4 und Empfänger 5 parallel nebeneinander liegend angeordnet, wobei die Strahlung gemäss dem Doppelpfeil 11 jeweils über eine zwischen diesen Baueinheiten und der Optik 6 gelegene Zusatzoptik 7 verläuft.

Weitere Ausführungsbeispiele der Erfindung sind in den Fig. 2b und 2c aufgezeigt, wo einmal eine aus einem Dachkant und einem parallelogrammförmigen Prisma zusammengesetzte Prismenkombination 7‴ bzw. der Zielmarkenprojektor

$7^{IV}$ z.B. eines nicht näher dargestellten Wärmebildgerätes an die Stelle von Strahlteilerwürfel oder -platte der Fig. 1 und 2 tritt. In beiden Fällen sind Sender und Empfänger wieder – wie schon in Fig. 2a – parallel nebeneinander liegend angeordnet. Im Fall der Fig. 2c ist es hierbei möglich, die aus der Zeichnung nicht ersichtlichen lichtemittierenden Dioden des Zielmarkenprojektors $7^{IV}$ moduliert zu betreiben und seinen nicht beleuchteten Teil als grossflächigen Detektor 5 zu verwenden. Auch ist es bei Verwendung eines Wärmebildgerätes denkbar, wenigstens eine der für die Wärmebilderzeugung notwendigen, im Gerät bereits vorhandenen lichtemittierenden Dioden 4' für die Lichtschranke des erfindungsgemässen optronischen Schalters zumindest in Geräten auszunutzen, in denen der Abtastspiegel im ausgeschalteten Zustand eine mechanische Nullstellung einnimmt.

Die Unterbrechungslinie zwischen Diode 4' und dem Umlenkspiegel deutet an, dass zwischen diesen beiden Bauelementen noch weitere zum Verständnis nicht erforderliche optische Komponenten liegen. Die Trennung der Sende- und Empfangsstrahlung erfolgt hier durch den Strahlteilerwürfel 13.

Die Erfindung ist nicht auf wehrtechnische Ziel- und/oder Beobachtungsgeräte beschränkt, sondern es ist selbstverständlich auch eine entsprechende Verwendung im kommerziellen zivilen Bereich, z.B. bei Fotoapparaten, Videokameras und dgl. denkbar.

## Patentansprüche

1. Vorrichtung zum Ein- und Abschalten eines Signals bei optischen oder optronischen Geräten mit einem Sichtkanal, einem Okular (3) mit Augenauflage (1), einer durch Annäherung des Benutzers an das Okular ein- und abschaltbaren Stromversorgung sowie mit einer Lupenoptik mit je einem in ihrem Bereich angeordneten Sender (4) und Empfänger (5), dadurch gekennzeichnet, dass an der Augenauflage (1) den Sichtkanal verdeckende und nur bei Kopfdruck durch den Benutzer sich öffnende, an ihrer dem Benutzer abgekehrten Seite mit einer Reflexfolie (8) versehene Blendenteile (2) angeformt sind, so dass bei geöffneten Blendenteilen (2) die vom Sender (4) ausgehende, an der Reflexfolie (8) reflektierte Strahlung zum Empfänger (5) unterbrochen ist.

2. Vorrichtung nach Anspruch 1, dadurch gekennzeichnet, dass ein Schalter (9) vorgesehen ist, der durch das Empfängersignal geschaltet wird, der bei durch die Blende nicht unterbrochener Strahlung das Gerät in Bereitschaftsstellung hält und bei unterbrochener Strahlung das Gerät in Betriebsstellung hält.

3. Vorrichtung nach Anspruch 2, dadurch gekennzeichnet, dass als Empfänger (5) Fototransistoren, Fotoelemente oder Fotowiderstände und als Sender (4) Glühlampen, Fluoreszenzschirme oder die mit einer Dauerstrich- oder einer pulsierenden oder kodiert pulsierenden Strahlung arbei

tenden lichtemittierenden Dioden eines Wärmebildgerätes vorgesehen sind.

4. Vorrichtung nach Anspruch 3, dadurch gekennzeichnet, dass die den Strahlengang je nach Bedarf schliessende oder freigebende Blende (2) aus einem oder aus mehreren an der Augenauflage (1) angeformten und durch – über den Kopfandruck bewirkte – Materialverformung der Augenauflage nach den Aussenseiten wegschwenkbaren Schutzlappen besteht, und dass in letzterem Fall die Schutzlappen an einander gegenüberliegenden Stellen der Augenauflage angeformt sind und bei geschlossener Blende bis zu ihrer gegenseitigen Berührung im Bereich der Längsachse des Okulars (3) reichen.

5. Vorrichtung nach einem der vorausgehenden Ansprüche, dadurch gekennzeichnet, dass die gesendete und die empfangene Strahlung direkt oder über optische Mittel (7) in die Lupenoptik (6) des Okulars (3) ein- und auch wieder austritt.

6. Vorrichtung nach Anspruch 5, dadurch gekennzeichnet, dass die optischen Mittel (7) aus einer Zusatzoptik einer Strahlteilerplatte (7''), einer Prismenkombination (7'''), einem Strahlteilerwürfel (7') oder einer Kombination von Strahlteilerwürfel (13) und Zielmarkenprojektor ($7^{IV}$) bestehen.

7. Vorrichtung nach einem der vorausgehenden Ansprüche, dadurch gekennzeichnet, dass Sender (4) und Empfänger (5) im Randbereich der Lupenoptik (6) sowie im Fall der Verwendung einer Zusatzoptik (7) oder einer Prismenkombination (7''') parallel nebeneinanderliegend, im Fall der Verwendung einer Strahlteilerplatte (7'') oder eines Strahlteilerwürfels (7') um 90° zueinander versetzt und im Fall der Kombination von Strahlteilerwürfel (13) und Zielmarkenprojektor ($7^{IV}$) in der Zielmarkenebene angeordnet sind.

8. Vorrichtung nach Anspruch 6 oder 7, dadurch gekennzeichnet, dass an den nicht von Strahlenreflexion, Strahlenein- oder Strahlenaustritt betroffenen Seiten des Strahlteilerwürfels (7') und der Prismenkombination (7''') ein Absorber (12) befestigt ist.

## Claims

1. Apparatus for switching a signal on and off in optical or optronic equipment having a viewing channel, an eyepiece (3) with an eye rest (1), a power supply which can be switched on and off by the user approaching the eyepiece, and a magnifying lens with, disposed close to it, a transmitter (4) and receiver (5), characterised in that integrally moulded on the eye rest (1), covering the viewing channel and opening only when pressed upon by the user's head, there are diaphragm parts (2) provided on the side remote from the user with a reflective film (8) so that when the diaphragm parts (2) are open, the beam emitted by the transmitter (4) to the receiver (5) and reflected by the reflective film (8) is interrupted.

2. Apparatus according to Claim 1, characterised in that a switch (9) is provided which is operated by the receiver signal which, when the beam is not interrupted by the diaphragm, maintains the appliance in the standby condition and in the operative condition when the beam is broken.

3. Apparatus according to Claim 2, characterised in that provided as receiver (5) may be phototransistors, photoelements or photoresistors and in that provided as transmitter (4) may be incandescent lamps, fluorescent screens or light emitting diodes of a heat image appliance operating with a continuous, pulsating, or coded-pulsating beam.

4. Apparatus according to Claim 3, characterised in that the diaphragm (2) which, according to requirements, closes or opens the beam path comprises one or a plurality of shields integrally moulded on the eye rest (1) and adapted to be pivoted towards the outsides by a change of shape of the material of the eye rest, brought about by the pressure applied by the head, and in that in the latter case the shields are integrally moulded in opposite locations on the eye rest and, when the diaphragm is closed, extend sufficiently to touch one another in the region of the longitudinal axis of the eyepiece (3).

5. Apparatus according to one of the preceding Claims, characterised in that the transmitted and received beam enters and re-emerges from the magnifier lens (6) of the eyepiece (3) directly or through optical means (7).

6. Apparatus according to Claim 5, characterised in that the optical means (7) comprise an accessory lens, a beam splitter plate (7″), a prism combination (7‴), a beam splitter cube (7′) or a combination of beam splitter cube (13) and tracking mark projector (7$^{IV}$).

7. Apparatus according to one of the preceding Claims, characterised in that transmitter (4) and receiver (5) are disposed in the marginal zone of the magnifier lens (6) and, if an accessory lens (7) or a prism combination (7‴) is used, are situated parallel and beside each other or if a beam splitter plate (7″) or a beam splitter cube (7′) is used, then they are staggered by 90° in respect of each other and, if a combination of beam splitter cube (13) and tracking mark projector (7$^{IV}$) is used, then they are disposed in the tracking mark plane.

8. Apparatus according to Claim 6 or 7, characterised in that an absorber (12) is fixed on those sides of the beam splitter cube (7′) and prism combination (7‴) which are not affected by beam reflection, beam entry or beam emergence.

## Revendications

1. Dispositif pour appliquer et interrompre un signal dans des appareils optiques ou opto-électroniques comportant un canal d'observation, un oculaire (3) muni d'un œilleton (1), un système d'alimentation en courant pouvant être branché et débranché par suite du rapprochement de l'utilisateur vis-à-vis de l'oculaire, ainsi qu'un système optique en forme de loupe comportant un émetteur (4) et un récepteur (5), branchés respectivement dans son voisinage, caractérisé en ce que des éléments formant diaphragme (2), qui masquent le canal d'observation au niveau de l'œilleton (1) et s'ouvrent uniquement lors de la venue en appui de la tête de l'utilisateur et sont munis d'une feuille réfléchissante (8) au niveau de leur face tournée à l'opposé de l'utilisateur, sont ménagés par moulage de telle sorte que, lorsque les éléments de diaphragme (2) sont ouverts, le rayonnement partant de l'émetteur (4) et réfléchi sur la couche réfléchissante (8) et dirigé vers le récepteur (5) est interrompu.

2. Dispositif selon la revendication 1, caractérisé en ce qu'il est prévu un commutateur (9), actionné par le signal du récepteur, qui maintient l'appareil à l'état prêt lorsque le rayonnement n'est pas interrompu par le diaphragme, et maintient l'appareil dans sa position de service lorsque le rayonnement est interrompu.

3. Dispositif suivant la revendication 2, caractérisé en ce qu'il est prévu, comme récepteur (5), des phototransistors, des éléments photosensibles ou des photorésistances et, comme émetteur (4), des lampes à incandescence, des écrans fluorescents ou bien les diodes photoémettrices d'un appareil de formation d'images thermiques, qui travaillent avec un rayonnement continu, avec un rayonnement pulsatoire ou pulsatoire codé.

4. Dispositif suivant la revendication 3, caractérisé en ce que le diaphragme (2) interrompant ou libérant, selon le besoin, le trajet de rayonnement est constitué par une ou plusieurs languettes de protection formées par moulage sur l'œilleton (1) et pouvant être écartées par rabattement vers le côté extérieur grâce à une déformation du matériau de l'œilleton — provoquée par la pression d'application de la tête — et que, dans le dernier cas, les languettes de protection sont réalisées par moulage en des emplacements de l'œilleton, situés réciproquement en vis-à-vis et se rejoignent, lorsque le diaphragme est fermé, jusqu'à venir en contact réciproque dans la zone de l'axe longitudinal de l'oculaire (3).

5. Dispositif selon l'une des revendications précédentes, caractérisé en ce que le rayonnement émis et le rayonnement reçu pénètrent et également ressortent à nouveau directement ou par l'intermédiaire de moyens optiques (7) dans le système optique en forme de loupe (6) de l'oculaire (3).

6. Dispositif selon la revendication 5, caractérisé en ce que les moyens optiques (7) sont constitués par un système optique supplémentaire, par une plaque formant diviseur de rayonnement (7″), par un ensemble combiné de prismes (7‴), par un cube formant diviseur de rayonnement (7′) ou par un ensemble combiné d'un cube formant diviseur de rayonnement (13) et d'un projecteur (7$^{IV}$) comportant des repères de visée.

7. Dispositif selon l'une des revendications précédentes, caractérisé en ce que l'émetteur (4) et le récepteur (5) sont disposés de manière à être côte à côte et parallèles dans la zone marginale du système optique en forme de loupe (6) ainsi que dans le cas de l'utilisation d'un système optique supplémentaire (7) ou d'un ensemble combiné de prismes (7‴), en étant décalés réciproquement de 90° dans le cas de l'utilisation d'une plaque formant diviseur de rayonnement (7″) ou d'un cube formant diviseur de rayonnement (7′), et en étant situés dans le plan des marques de visée dans le cas de l'ensemble combiné formé d'un cube formant diviseur de rayonnement (13) et d'un projecteur (7$^{IV}$) comportant des marques de visée.

8. Dispositif selon la revendication 6 ou 7, caractérisé en ce qu'un absorbeur (12) est fixé au niveau des faces, qui ne sont pas concernées par la réflexion, l'entrée ou la sortie du rayonnement, du cube formant diviseur de rayonnement (7′) de l'ensemble combiné de prismes (7‴).

Fig. 1

Fig. 2

Fig. 2a

Fig. 2b

Fig. 2c